# EUROPEAN PATENT SPECIFICATION

(11) **EP 0 400 156 B1**
(45) Date of publication and mention of the grant of the patent: **19.06.1996**
(21) Application number: 90901012.6
(22) Date of filing: 15.12.1989
(51) Int. Cl.: B60P 1/04

(54) **REAR DUMP TRUCK AND TRANSPORTATION METHOD OF GRANULAR CARGO USING THE SAME**
HECKKIPPLASTWAGEN UND DIESEN BENUTZENDES TRANSPORTVERFAHREN FÜR GRANULIERTE LADUNG
CAMION A DECHARGEMENT PAR L'ARRIERE ET PROCEDE DE TRANSPORT DE MARCHANDISES GRANULAIRES UTILISANT CE CAMION

(30) Priority: 15.12.1988 JP 315073/88
(43) Date of publication of application: 05.12.1990
(73) Proprietor: Sumino, Shin, Yokohama-shi Kanagawa-ken (JP)
(72) Inventor: Sumino, Shin, Yokohama-shi Kanagawa-ken (JP)
(74) Representative: Jennings, Nigel Robin
(86) International application number: JP8901267
(87) International publication number: WO9006864

(56) References cited:
- JP-A-59 195 433
- JP-A-63 116 948
- JP-U- 6 136 457
- JP-Y- 0 437 538
- JP-Y- 5 728 823

## Description

### Technical Field

This invention relates to a rear dump car having a sieving apparatus, and a transportation method of granular cargo, such as crude materials for industrial application, such as coke, or agricultural products, such as cereals, using such rear dump car.

More particularly, the invention relates to a rear dump truck which is provided at the rear part of an tiltable cargo box with a forced vibration type sieving apparatus for sorting the granular cargo flowing down from the front part of the cargo box in accordance with their sizes, and which is also provided with a sieve undercargo chamber inside the cargo box at the lower rear part of the sieving apparatus.

The invention also relates to a transportation method of the granular cargo using such rear dump car.

### Background Art

The crude materials for industrial application, such as coke, ferrous alloys or phosphorus ores, are transported as they are handled in various ways from the site of generation to the site of destination. These granular materials are so-called bulk cargo in which the materials of various particle size ranging from powders or fine size particles to coarse size blocks exist together. The percentage of finer size particles is increased due to damages inflicted in the course of transport and handling.

With agricultural products in particulate or granular form, including cereals, such as rice or wheat, the percentage of destructed grains or powders is increased as a result of repeated handling. These destroyed grains or powders need be removed by sieving or the like operation.

On the other hand, users receiving such bulk cargo are frequently in demand of the material of a specific particle size from the bulk cargo consisting of a mixture of various size materials. For example, in case of the coke which is charged into a blast furnace of an iron-making plant, the optimum particle size is said to be 20 to 50mm for assuring moderate voids in the blast furnace and simultaneously assuring the function of the coke as the heat source and as the reducing material. As for the foundry coke, the optimum particle size is larger than that for blast furnace coke for maintaining the voids in the melting furnace in which the air capacity per unit cross-sectional area and the bullion fusion rate are higher than those in the blast furnace, and for assuring the function to the coke as the heat medium and as a carburizer. Thus there is a demand for the coke of various particle sizes in the order of 1/8 to 1/12 of the inside diameter of a cupola, such as 60 to 80mm, 80 to 120mm and higher than 120mm. The coke for alloy iron used in an electrical furnace as a reducing agent by resistance heating in an electrical furnace for producing ferrosilicon, ferromanganese or ferrochrome, is required to have a particle size ranging from 10 to 30mm. The coke need for producing a CO gas from a solid carbonaceous raw material, such as coal, has a particle size of about 30mm. The coke of various different particle size is demanded as a function of the furnace types such as those for calcium carbide, limestone sintering, cement manufacture or room heating.

Heretofore, the coke produced in the coking plant or the ores transported by transport vessels are transported by usual dump trucks or railway luggage cars and weighed while being transported before being heaped and stored in a storage yard. The coke or ores are loaded from the yard into a dump truck or railway luggage car and transported to a sorting plant before being unloaded at the storage site of the plant from the truck or car for transient storage.

They are then conveyed by another truck etc. to a sieving sorter equipped in the sorting plant, unloaded into a hopper in the sorter, charged into the sorter by a belt conveyor, sorted according to particle size by sieving and separately collected by separate belt conveyors as fractions having different particle sizes. The thus collected coke fractions having various particle sizes are transported by tracks or the like, weighed and separately stored in the sorting warehouse of the plant according to the different particle sizes. They are then delivered directly to users or delivered by truck transport to users after having been reload and transported by transport vessels.

With the conventional transport methods for bulk cargo, the damage inflicted to the cargo is increased due to repeated unloading and handling before delivery to the ultimate user, so that the damage to the fractions with finer particle size is increased during transport with frequent flying of fine dusts. There are also necessitated a space for depots or control sites for each unloading and a lot of man power.

With the conventional method, sorting or classifying is performed with a fixed type sieve placed in a sorting plant.

Thus the same sieve is frequently used for various types of granular cargo and the dust produced at this time may be mixed with other types of dusts at a precipitator to render the dust almost unusable.

Moreover, with imported cargo, for example, it is not apparent until the end of the sorting operation if the particle size distribution of the granular cargo which has been delivered is within the range of the contract size so that simple sampling cannot but be resorted to at the port of destination of imported cargo.

In the US Patent 4,552,653, allowed to the present inventor on November 12, 1985, there is disclosed a rear dump truck which is provided with a sieving apparatus at the rear part of an tiltable cargo box for sorting the granular cargo flowing down from the front part of the cargo box in accordance with their different class sizes, and with a sieve undercargo chamber inside the cargo box at the lower rear part of the sieving apparatus. This rear dump truck is so constructed that downflow of the granular cargo due to the tilt of the cargo box is controlled by a power gate as the granular cargo is introduced into a sieving apparatus at the rear part of the cargo box and the granular cargo fractions of different particle sizes are produced by sieving so as to be stored in separate cargo chambers.

Although it has become possible with such rear dump truck to perform sieving of the granular cargo simultaneously with unloading, the rear dump truck is so constructed that the sieving apparatus consists simply in an inclined sieve net which is fixedly provided at the rear part of the cargo box and the cargo is allowed to flow down on the sieve net by the tilted cargo box and power gate adjustment. Thus it occurs frequently that the cargo becomes clogged at the power gate or the various types of cargo with different size and shape may undergo degradation in the sieving quality so that the operator is required to have high skill for realising stable sieving.

### Disclosure of the Invention

In order to overcome the problems referred to above, it is the object of the present invention to provide a rear dump truck with a sieving apparatus which is improved over that disclosed in US-A-4,552,653 whereby a granular cargo, such as cereals or the like, coke or ores may be sieved simultaneously with transport thereof and may be subsequently unloaded and sorted by size after minimum handling.

According to the present invention a rear dump truck of the type comprising hopper means for accepting a granular cargo at the front part of said cargo box, power gate means disposed at a rear outlet of said hopper means for controlling the passage of said cargo therethrough, a vibration sieving apparatus disposed at the rear part of said cargo box for classifying the granular cargo flowing down through said power gate means in accordance with their sizes, and a sieve undercargo chamber inside said cargo box at the lower rear part of said sieving apparatus, is characterised in that said hopper means is provided with a feeding means adapted to be driven reciprocally at the bottom portion of said rear outlet for feeding out the granular cargo into said vibration sieving apparatus, that the operation of said feeding means is inhibited when said cargo box rests on the truck chassis and initiated since the time the feeding means is brought to a horizontal position and further to a position in which its rear part is at a lower height than its front part by the tilt of said cargo box, and that said vibration sieving apparatus starts its vibrational operation prior to the operation of said feeding means.

In one embodiment, the sieving apparatus is of a multiple tier type provided with plural stages of sieve nets of different mesh sizes, and the sieve undercargo chamber consists of a plurality of multiple tier cargo chambers corresponding to the number of the sieve nets.

The rear dump truck according to the present invention preferably includes jack means at the lower rear side of the chassis of the truck for supporting the chassis at a desired height above the ground surface.

A method of transporting a granular cargo using a rear dump truck in accordance with the present invention may include directly unloading the granular cargo transported by another transport means, such as a vessel, from the transport means into the hopper in the front part of the cargo box by a crane bucket or the like, holding and transporting the cargo thus unloaded in the rear dump truck, classifying the granular cargo at its destination with the sieving apparatus before unloading from the truck and unloading the granular cargo at the destination with different size classes. The granular cargo may be weighed whilst still loaded on the rear dump truck.

The dump truck in accordance with the present invention may also be used for transporting a granular cargo to a custodial warehouse or a transport vessel in a port and sorting the cargo with the said sieving apparatus as the cargo is unloaded from the rear dump truck into the custodial warehouse to effect unloading of the dump truck in accordance with different class sizes.

If a granular cargo is to be unloaded from a transport vessel, the cargo may be directly unloaded from the transport vessel by a loader, such as a crane bucket, and an unloader into the hopper in the front part of the cargo box of the rear dump truck which then transports it. Until the time that the granular cargo is ultimately unloaded from the rear dump truck at its destination, a sorting operation may be carried out by the sieving apparatus, so that the granular cargo may be unloaded and sorted by size.

Thus the granular cargo may be sieved in its entirety while it is loaded on the truck, so that the powdered fraction in the granular cargo may be wastelessly recovered as the sieve undercargo without being mixed with the other cargo and hence the powdered fraction also has commercial value. In this manner, the particulate cargo may be utilised in its entirety wastelessly.

Thus by using the rear dump truck according to the present invention, it becomes possible to sort and transport a granular cargo, including agricultural products, such as cereals, or coke or coal while they are efficiently screened at the site of production. Since the goods of the desired particle size range may be obtained on unloading at the customer's site, the cargo may be utilised in its entirety without waste at the customer's site. Since redundant unloading is unnecessary during transport, the number of unloaders, such as shovel cars may be reduced, while the number of times of handling may be reduced and the damage done to the load during transport may be minimised. Redundant depot spaces for cargo are unnecessary and a saving in manpower is achieved. The particle size distribution may be determined immediately with high accuracy at the time of reception of the granular cargo to be transported so that causes of troubles may be promptly eliminated. Powdery goods and oversize goods which cause clogging of the hopper can be removed simultaneously and taken out separately. Thus, if a crusher is used for crushing the oversize goods, the latter may be recovered as goods of the correct size.

One preferred embodiment of the present invention will be explained below with reference to the accompanying drawings, in which:-
Figs. 1 to 4 are schematic views showing four different ways in which a rear dump truck in accordance with the invention may be used; and
Fig. 5 shows the construction of an example of a rear dump truck with a vibrational screen in accordance with the invention.

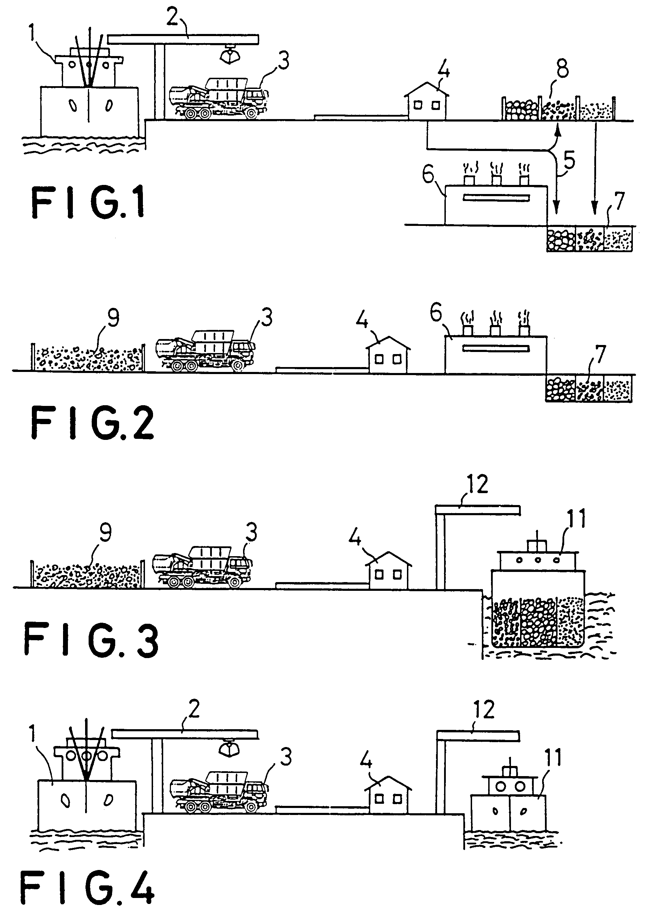

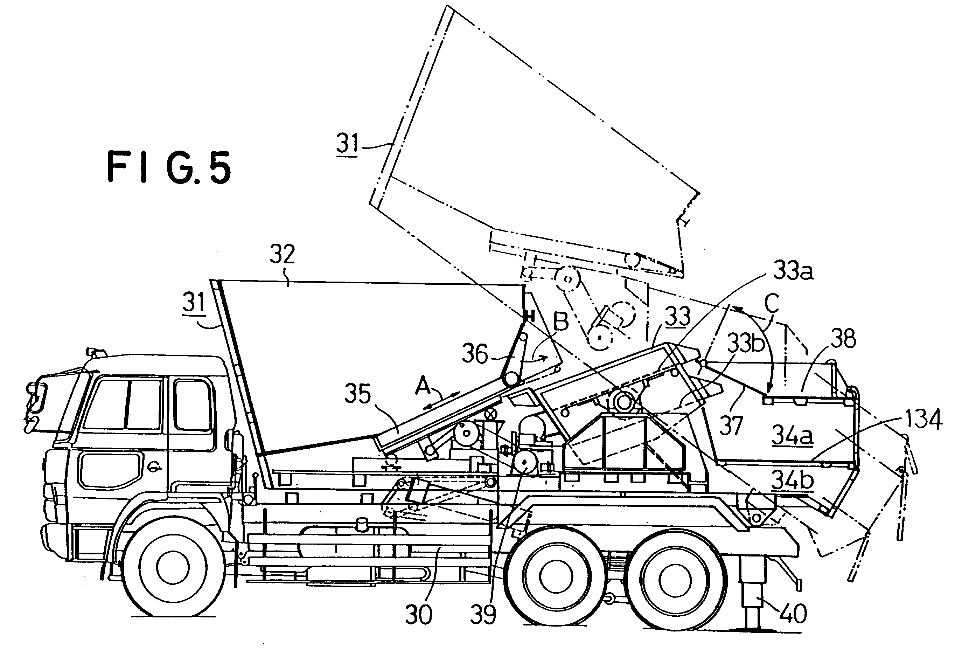

Figs. 1 to 4 illustrate different ways of making use of a rear dump truck with a vibrational screen as shown in Fig. 5. The rear dump truck with a vibrational screen 3 is explained by referring to Fig. 5. A cargo box 31 on a vehicle chassis 30 may be tilted by a hydraulic operation, as indicated by a chain-dotted line.

The cargo box 31 includes a hopper 32 placed at its front part, a force vibration type two-stage tilting and vibrating sieving apparatus 33, placed at the rear part of the cargo box 31, and sieve undercargo chambers 34a, 34b inside the box at the lower rear part of the sieving apparatus 33. A hopper 32 is provided on its rear exit bottom surface with a plate feeder 35 adapted to be reciprocated in the direction shown by an arrow A. A power gate 36 for opening and closing an exit opening of the hopper 32 by being turned in the direction of an arrow B by a hydraulic operation is provided at the forward end of the feeder 35. The vibration sieving apparatus 33 is provided with a coarser upper stage sieve 33a and a finer lower stage sieve 33b. The undercargo of the upper stage sieve 33a communicates with the first cargo chamber 34a, whereas that of the lower stage sieve 33b communicates with the second cargo chamber 34b. Meanwhile, the upper surface of the upper stage sieve 33a commuicates with a rear uppermost cargo chamber 38 by means of a swing type lid 37. The lid 37 may be swung in the direction of an arrow C and, when in the opened position, permits attachment and removal of the lower stage sieve 33b. The cargo chambers 34a, 34b, 38 may also be opened or closed by respective flap doors. A partition plate 134 dividing the cargo chambers 34a, 34b from each other may be designed in its entirety for rotation about a horizontal shaft to change the volumes of the cargo chambers 34a, 34b. The feeder 35, the power gate 36 and the vibration sieving apparatus 33 are driven by a motor 39 equipped on the cargo box 31 and the control operations are performed from the driver's seat. When the cargo box rests on the vehicle chassis, feeder 35 has its forward side at a lower position. Hence, when the feeder 35 is actuated in this position, there is a risk of the cargo biting into feeder 35.

For this reason, the interlocking of the feeder 35 is so designed that the feeder may be actuated only after it is brought to a horizontal position by the tilt-up motion of the cargo box. Conversely, the sieving apparatus 33 starts its vibrating operation before actuation of the feeder 35.

Power gate 36 plays the role of adjusting the size of the hopper exit opening of the feeder 35 to a more or less extent depending on the size of the granular cargo being handled.

With the tilting-up of the cargo box, the granular cargo flows down from inside the hopper 32 into the rear side sieving apparatus 33 by way of feeder 35. During such downflow of the granular cargo, the tilting state of the power gate 36 is variably controlled so as to provide a moderate flow rate without cargo clogging. This is necessitated for more efficient sorting by the rear side sieving apparatus 33. In Fig. 5, numeral 40 denotes a jack mounted with a downward position at the rear side of the chassis for independent operation at least on the left and right sides, that is in the width direction of the vehicle, for maintaining the stability of the vehicle body when the cargo box 31 is tilted as shown by a chain-dotted line and for assuring horizontally of the sieving apparatus in the width direction with respect to the inclination of the ground surface.

In one method of use, shown in Fig. 1, the granular cargo transported by a transport vesssel to a port of destination is loaded by an unloading crane 2 into a hopper 32 at the front part of the rear dump truck 3 with a vibrational screen. The truck 3 is placed on a weighing machine 4 for detecting the weight of the load and delivered to a user plant 6 via route 5. For unloading at the plant 6, the sorting operation is simultaneously performed with the aid of the sieving apparatus 33 of the truck 3, so that unloading operation is sequentially performed into each of receivers 7 of the plant 6 adapted for receiving the granular cargo with different size classes. As an alternative route, the granular cargo may be unloaded after weighing into a custodial warehouse 8 with size classifications. As a combination of these two routes, a certain fraction of the granular cargo may be directly delivered to the plant 6 and the remaining fraction of the granular cargo stored in the custodial warehouse. For each of these fractions, the sorting operation by the sieving apparatus 33 of the truck 3 is performed simultaneously with delivery for achieving unloading with size classifications.

In a second method shown in Fig. 2, the granular cargo stacked in a yard of a mine or producing plant is loaded on the rear dump truck 3 with a vibrational screen in the same way as described above, weighed by a weighing machine 4 and loaded in each of receivers 7 of the plant 6 adapted to receive the granular cargo with different class sizes.

Fig. 3 shows a third method in which the granular cargo is loaded after weighing into a vessel 11 at a loading port with the aid of a loader 12 similar to the second method. At this time, as the granular cargo is unloaded from the rear dump truck 3 with a vibrational screen, it is sorted simultaneously by its sieving apparatus 33 to effect loading into the vessel 11 according to different class sizes so that the fractions of the cargo with different class sizes may be handled separately at a stopover port as pre-classed cargo.

Fig. 4 shows a fourth method which is a combination of the unloading of the first method and the loading into the vessel of the third method.

## Claims

1. A rear dump truck having a tiltable cargo box (31) comprising hopper means (32) for accepting a granular cargo at the front part of said cargo box (31), power gate means (36) disposed at a rear outlet of said hopper means (32) for controlling the passage of said cargo therethrough, a vibration sieving apparatus (33) disposed at the rear part of said cargo box (31) for classifying the granular cargo flowing down through said power gate means (36) in accordance with their sizes, and a sieve undercargo chamber (34a, 34b) inside said cargo box (31) at the lower rear part of said sieving apparatus (33), characterized in that said hopper means (32) is provided with a feeding means (35) adapted to be driven reciprocally at the bottom portion of said rear outlet for feeding out the granular cargo into said vibration sieving apparatus (33), that the operation of said feeding means (35) is inhibited when said cargo box (31) rests on the truck chassis (30) and initiated since the time the feeding means (35) is brought to a horizontal position and further to a position in which its rear part is at a lower height than its front part by the tilt of said cargo box (31), and that said vibration sieving apparatus (33) starts its vibrational operation prior to the operation of said feeding means (35).

2. The rear dump truck according to claim 1 characterized in that said vibration sieving apparatus (33) is of a multiple tier type provided with plural stages of sieve nets (33, 33b) of different mesh sizes, and that said sieve undercargo chamber consists of a plurality of multiple tier cargo chambers (34a, 34b) corresponding to the number of said sieve nets (33a, 33b).

3. The rear dump truck according to claim 1 characterised in that said truck further comprises jack means (40) at the lower rear side of the truck chassis (30), said jack means (40) being adapted to support said chassis (30) at a desired height above the ground surface.

## Patentansprüche

1. Heck-Kipplastwagen mit einem kippbaren Ladekasten (31), der ein Trichtermittel (32) zur Aufnahme einer granulatförmigen Ladung am vorderen Teil des besagten Ladekastens (31) aufweist, sowie ein antreibbares Verschlußmittel (36), das an einem hinteren Auslaß des besagten Trichtermittels (32) zur Steuerung des Durchgangs der besagten Ladung angeordnet ist, eine am hinteren Teil des besagten Ladekastens (31) angeordnete Schwingsiebvorrichtung (33) zur Klassifizierung der nach unten durch das besagte antreibbare Verschlußmittel (36) abfließenden granulatförmigen Ladung entsprechend ihren Korngrößen und eine Siebdurchgangsaufnahmekammer (34a, 34b) innerhalb des besagten Ladekastens (31) am unteren hinteren Teil der besagten Siebvorrichtung (33), dadurch gekennzeichnet, daß das besagte Trichtermittel (32) am Bodenteil des besagten hinteren Auslasses mit einem in einer Hin- und Herbewegung antreibbaren Zuführungsmittel (35) zum Herausführen der granulatförmigen Ladung in die besagte Schwingsiebvorrichtung (33) versehen ist, daß das Inbetriebsetzen des besagten Zuführungsmittels (35) gesperrt ist, wenn der besagte Ladekasten (31) auf dem Lastwagenchassis (30) aufliegt und in der Zeit eingeleitet wird, in welcher das Zuführungsmittel (35) durch das Kippen des besagten Ladekastens (31) in eine horizontale Lage und weiter in ein Lage gebracht wird, in der sein hinterer Teil sich auf einer geringeren Höhe befindet als sein vorderer Teil und daß die besagte Schwingsiebvorrichtung (33) ihren Schwingbetrieb vor dem Inbetriebsetzen des besagten Zuführungsmittels (35) beginnt.

2. Heck-Kipplastwagen nach Anspruch 1, dadurch gekennzeichnet, daß die besagte Schwingsiebvorrichtung (33) von einem Mehrschichttyp ist und mit einer Mehrzahl von Stufen aus Siebgeflechten (33a, 33b) mit unterschiedlichen Maschenweiten versehen ist und daß die besagte Siebdurchgangsaufnahmekammer aus einer Mehrzahl von Mehrschicht-Aufnahmekammern (34a, 34b) entsprechend der Anzahl der besagten Siebgeflechte (33a, 33b) besteht.

3. Heck-Kipplastwagen nach Anspruch 1, dadurch gekennzeichnet, daß der besagte Lastwagen weiterhin am unteren hinteren Ende des Lastwagenchassis (30) ein Wagenhebemittel (40) aufweist, wobei das besagte Wagenhebemittel (40) dazu geeignet ist, das besagte Chassis (30) in einer gewünschten Höhe über der Bodenoberfläche abzustützen.

## Revendications

1. Camion à benne basculant vers l'arrière ayant un caisson inclinable (31) de marchandises, comprenant un moyen (32) formant une trémie servant à recevoir une cargaison granulaire à la partie avant dudit caisson de marchandises (31), un moyen (36) formant une porte commandée par un moteur pour réguler le passage desdites marchandises à travers la trémie étant placé au niveau de la sortie arrière dudit moyen (32) formant une trémie, un appareil (33) de criblage par vibrations disposé au niveau de la partie arrière dudit caisson (31) de marchandises afin de classifier la cargaison granulaire descendant en passant à travers ledit moyen (36) formant une porte commandée par un moteur, en conformité avec leur granulométrie, et une chambre de criblage de la cargaison (34a, 34b) à l'intérieur dudit caisson de marchandises (31) au niveau de la partie arrière inférieure dudit appareil (33) de criblage, caractérisé en ce que ledit moyen (32) formant une trémie est prévu avec un moyen d'alimentation (35) adapté pour être entraîné réciproquement au niveau de la partie inférieure de ladite sortie arrière pour faire passer la cargaison granulaire dans ledit appareil (33) de criblage par vibrations, en ce que le fonctionnement dudit moyen d'alimentation (35) est empêché lorsque ledit caisson de marchandises (31) repose sur le châssis (30) du camion et en ce que le fonctionnement commence au moment où le moyen d'alimentation (35) est placé dans une position horizontale et ensuite dans une position dans laquelle sa partie arrière est à une hauteur plus basse que sa partie avant par l'inclinaison dudit caisson de marchandises (31), et en ce que l'appareil (33) de criblage par vibrations commence son fonctionnement par vibrations avant le fonctionnement dudit moyen d'alimentation (35).

2. Camion à benne basculant vers l'arrière selon la revendication 1, caractérisé en ce que ledit appareil (33) de criblage par vibrations est du type à étages multiples prévu avec plusieurs niveaux de filets de criblage (33a, 33b) de différentes tailles de mailles, et en ce que ladite chambre de criblage de la cargaison se compose d'une pluralité de chambres de cargaison à étages multiples (34a, 34b) correspondant au nombre desdits filets de criblage (33a, 33b).

3. Camion à benne basculant vers l'arrière selon la revendication 1, caractérisé en ce que ledit camion comprend en outre un moyen (40) formant un vérin au niveau du côté arrière inférieur du châssis (30) du camion, ledit moyen (40) formant un vérin étant adapté pour supporter ledit châssis (30) à une hauteur souhaitée au-dessus de la surface du sol.
